# EUROPÄISCHE PATENTANMELDUNG

(11) **EP 4 366 114 A1**
(43) Veröffentlichungstag der Anmeldung: **08.05.2024**
(21) Anmeldenummer: 22205726.7
(22) Anmeldetag: 07.11.2022
(51) Int. Cl.: H02J 7/00, H02J 9/06, H02J 15/00

(54) **ANLAGE ZUR AUTARKEN UND UNUNTERBROCHENEN BEREITSTELLUNG VON WASSERSTOFF**

(71) Anmelder: H2-Greenforce, BV, 1016EJ Amsterdam (NL)
(72) Erfinder: Konstantinidis, Evangelos, 57368 Lennestadt (DE)
(74) Vertreter: Fink Numrich Patentanwälte PartmbB

(57) **Zusammenfassung**

Die Erfindung betrifft eine Anlage zur autarken und ununterbrochenen Bereitstellung von Wasserstoff, wobei die Anlage (1) als Komponenten, die zusammen an einem Ort in räumlicher Nähe angeordnet sind, umfasst: eine Stromerzeugungsvorrichtung (10) zur Erzeugung von Strom aus regenerativen Energien, zumindest einen Stromverbraucher (20), umfassend eine Vorrichtung (21) zur Erzeugung von Wasserstoff, einen wieder aufladbaren Energiespeicher (30), in den von der Stromerzeugungsvorrichtung (10) erzeugter Strom für eine Entnahme durch den zumindest einen Stromverbraucher (20) gespeichert wird, und eine Steuerungseinheit (40) zur Steuerung der Energieerzeugung der Stromerzeugungsvorrichtung (10), des Ladezustands des Energiespeichers (30) und des Energieverbrauchs des Stromverbrauchers (20). Der Energiespeicher (30) umfasst eine Schalteinrichtung (35) und zumindest einen Energiespeicherblock (31, 32, 33) mit jeweils zumindest zwei Speichermodulen (31-1,..,31-n; 32-1,.., 32-n; 33-1,..,33-n). Der Energiespeicher (30) ist zwischen der Stromerzeugungsvorrichtung (10) und dem zumindest einen Stromverbraucher (20) verschaltet. Die Schalteinrichtung (35) ist dazu ausgebildet, einen direkten Stromfluss zwischen der Stromerzeugungsvorrichtung (10) und dem zumindest einen Stromverbraucher (20) in einer ersten Betriebssituation zu ermöglichen und in einer zweiten Betriebssituation zu unterbrechen. Die Steuerungseinheit (40) ist dazu ausgebildet, in der zweiten Betriebssituation durch Steuerung der Schalteinrichtung (35) ein erstes Speichermodul der zwei Speichermodule des zumindest einen Energiespeicherblocks (31, 32, 33) mit der Stromerzeugungsvorrichtung (10) zu verbinden, um das erste Speichermodul zu laden, und zeitgleich ein zweites Speichermodul der zwei Speichermodule mit dem zumindest einen Stromverbraucher (20) zu verbinden, um den zumindest einen Stromverbraucher (20) aus dem zweiten Speichermodul zu versorgen.

## Beschreibung

Die Erfindung betrifft eine Anlage zur autarken und ununterbrochenen Bereitstellung von alternativen, insbesondere grünen, Energieträgern für die Sektoren Privat, Industrie und Mobilität. Insbesondere betrifft die Erfindung eine Anlage zur autarken und ununterbrochenen Bereitstellung von Wasserstoff.

Um im Verkehrssektor den lokalen Ausstoß von CO₂ zu verringern, soll in der Zukunft die Anzahl elektrisch betriebener Fahrzeuge stark erhöht werden. Aktuell beträgt die Anzahl der in Deutschland zugelassenen elektrisch betriebenen Fahrzeuge (E-Fahrzeug) etwas mehr als eine Million. Dies erfordert eine gute Lade-Infrastruktur für die elektrisch betriebenen Fahrzeuge.

Für die Sektoren Industrie und Privat existieren in Deutschland verschiedene gesetzliche Voraussetzungen, dass diese als "grün", d.h. umweltfreundlich, gelten. So darf der eingesetzte Strom ausschließlich aus Anlagen zur Erzeugung erneuerbarer Energien stammen. Weiterhin muss Strom zu mindestens 80 % aus Anlagen mit einem Standort in einer bestimmten Preiszone, Deutschland, stammen. Umgekehrt darf der Strom nur zu einem Anteil von 20 % aus Quellen bezogen werden, die mit einer anderen Preiszone verbunden sind. Zudem darf der bezogene Strom keine Förderungen nach dem EEG (Erneuerbare-Energien-Gesetz), KWKG (Kraft-Wärme-Kopplungsgesetz), EEV (Erneuerbare-Energien-Verordnung) noch eine sonstige Förderung in Anspruch genommen haben. Eine weitere Anforderung stellt eine Begrenzung der Betriebszeit auf 5000 Vollbenutzungsstunden eines Kalenderjahres dar. Ziel dieser Klausel ist es, einen netzdienlichen Betrieb von Stromverbrauchern anzureizen, indem insbesondere in Zeiten hoher regenerativer Energieerzeugung und daraus resultierend günstigen Strompreisen, mittels des Stromverbrauchers Wasserstoff produziert wird. Auf einen Strombezug oberhalb dieser Begrenzung muss dann eine festgelegte Umlage entrichtet werden.

Für die erfolgreiche Umsetzung der festgelegten Klimaziele zu einem Wechsel mit einem 0%-CO₂-Ausstoß, sind neben der Netzstabilität auch die Verfügbarkeit von erneuerbaren Energien, die als grüne Energien bezeichnet werden, für die einzelnen Sektoren von Relevanz.

Um CO₂-Neutralität in allen Sektoren zu garantieren, müssen daher ausreichend erneuerbare Energiequellen zur Verfügung stehen. Dabei sollen und dürfen die einzelnen Sektoren untereinander nicht um die grüne Energie im Wettbewerb stehen.

In diesem Umfeld spielt Wasserstoff neben seinem zukünftigen Einsatz in den Prozessen der Industrie und im privaten Sektor auch eine große Rolle im Mobilitätssektor. Wasserstoff als zukünftiger Energieträger und Mobilitätstreibstoff führt dazu, dass sich die Sektoren Privat, Industrie und Mobilität hierauf durch Investitionen technisch vorbereiten. Speziell für die Herstellung von Wasserstoff bedarf es dabei Lösungen, die autark sind und eine ununterbrochene Produktion, d.h. 24h/Tag und / 7 Tage/Woche ("24/7") mit hundertprozentig nachhaltiger und CO₂-freier Energie garantieren. Aus der DE 10 2016 208 889 A1 ist beispielsweise eine Anlage zur Bereitstellung von Wasserstoff mit einer Vorrichtung zur Herstellung von Wasserstoff durch elektrochemische Spaltung von Wasser in Wasserstoff und Sauerstoff (Elektrolysevorrichtung) bekannt. Die Anlage dient der Bereitstellung von im Privatbereich erzeugtem und verbrauchtem Wasserstoff, der insbesondere zur Betankung eines mit Wasserstoff betriebenen Fahrzeugs oder in einer Brennstoffzelle zur Stromerzeugung eingesetzt werden kann. Dabei wird vorgeschlagen, den für die elektrochemische Spaltung von Wasser in Wasserstoff und Sauerstoff benötigten Strom durch eine Anlage zur Stromerzeugung, z.B. eine Photovoltaikanlage, zu produzieren. Alternativ kann die elektrische Energie zum Betrieb der Anlage aus einem öffentlichen Stromnetz entnommen werden, so dass auch nachts oder in trüben Winterwochen die Herstellung von Wasserstoff möglich ist. Konstruktiv ist es somit nicht möglich, die Anlage zur Bereitstellung von Wasserstoff kontinuierlich und ununterbrochen mit regenerativen Energien zu betreiben.

Eine derartige für den Privatbereich ausgelegte Anlage zum Betreiben von Wasserstoff kann somit nicht ausreichend energieautark betrieben werden, was sowohl aus ökologischer als auch aus ökonomischer Sicht wünschenswert wäre. Insbesondere besteht das Problem, dass bei einer Vielzahl derartiger Anlagen, signifikante Strommengen über das öffentliche Stromnetz transportiert werden müssen, was die derzeit existierende Netzinfrastruktur an den Rand der Belastbarkeit bringen kann.

Es ist daher Aufgabe der Erfindung, eine Anlage bereitzustellen, die in der Lage ist, zumindest im Wesentlichen autark und ununterbrochen zumindest einen alternativen Energieträger, umfassend Wasserstoff, bereitzustellen.

Es ist ferner Aufgabe der Erfindung, ein Verfahren anzugeben, mit dem die zumindest im Wesentlichen autarke und ununterbrochene Bereitstellung zumindest eines alternativen Energieträgers, umfassend Wasserstoff, ermöglicht wird.

Diese Aufgaben werden gelöst durch eine Anlage gemäß den Merkmalen des Patentanspruchs 1 und ein Verfahren gemäß den Merkmalen des Patentanspruchs 15. Vorteilhafte Ausgestaltungen ergeben sich aus den abhängigen Patentansprüchen.

Es wird eine Anlage zur autarken oder im Wesentlichen autarken und ununterbrochenen Bereitstellung zumindest eines alternativen Energieträgers, umfassend Wasserstoff, vorgeschlagen, wobei der zumindest eine alternative Energieträger zur Verwendung in den Sektoren Privat, Industrie und Mobilität vorgesehen ist. Die Anlage stellt eine sog. "grüne Insel" dar, welche im Grundsatz ohne Anbindung an das öffentliche Stromnetz auskommt. Die Anlage ist dabei in der Lage den zumindest einen alternativen Energieträger ununterbrochen (24/7) bereitzustellen.

Die Anlage umfasst die folgenden Komponenten, die zusammen an einem Ort, der grünen Insel, in räumlicher Nähe angeordnet sind: eine Stromerzeugungsvorrichtung zur Erzeugung von Strom aus regenerativen Energien. Die Stromerzeugungsvorrichtung umfasst insbesondere eine Windkraftanlage mit einer oder mehreren Windturbinen und/oder zumindest eine Photovoltaikanlage und/oder ein Wasserkraftwerk, wie z.B. eine Laufwasseranlage. Die Stromerzeugungsvorrichtung kann optional weitere regenerative Energiequellen umfassen. Die regenerativen Energiequellen können dabei in einer beliebigen Weise miteinander kombiniert sein.

Die Anlage umfasst als weitere Komponente(n) zumindest einen Stromverbraucher, umfassend eine Vorrichtung zum Erzeugen von Wasserstoff durch elektrochemische Spaltung von Wasser in Wasserstoff und Sauerstoff. Wasserstoff stellt einen alternativen Energieträger im Sinne der vorliegenden Beschreibung dar für, der z.B. im Mobilitätssektor zum Einsatz kommt. Ebenso wird der Wasserstoff, häufig in Verbindung mit Sauerstoff, im Industriesektor sowie im privaten Sektor genutzt. Die Vorrichtung zur Erzeugung von Wasserstoff durch elektrochemische Spaltung von Wasser in Wasserstoff und Sauerstoff stellt eine Elektrolyseanlage bzw. einen Elektrolyseur dar. Ferner umfasst die Anlage als Komponente einen wiederaufladbaren Energiespeicher, in den von der Stromerzeugungsvorrichtung erzeugter Strom für eine Entnahme durch den zumindest einen Stromverbraucher gespeichert wird.

Eine Steuerungseinheit dient zur Steuerung der Energieerzeugung der Stromerzeugungsvorrichtung, des Ladezustands des Energiespeichers und des Energieverbrauchs des Stromverbrauchers. Unter der Steuerung der Energieerzeugung der Stromerzeugungsvorrichtung ist insbesondere eine Steuerung derart zu verstehen, dass die Komponenten der Stromerzeugungsvorrichtung im Hinblick auf die von ihnen erzeugte Strommenge gesteuert werden. Unter der Steuerung des Ladezustands des Energiespeichers mittels der Steuerungseinheit wird insbesondere eine gezielte Steuerung des Ladezustands (State of Charge, SoC) verstanden. Die Steuerung des Energieverbrauchs des Stromverbrauchs umfasst insbesondere die Steuerung, welche Höhe der Stromverbrauch der Stromverbraucher zu einem jeweiligen Zeitpunkt annehmen darf oder muss. Unter der Steuerung des Stromverbrauchs des Stromverbrauchers ist insbesondere eine Steuerung im Sinne einer aktuellen Stromabnahme zu verstehen.

Die Anlage zeichnet sich dadurch aus, dass der Energiespeicher eine Schalteinrichtung und zumindest einen Energiespeicherblock mit jeweils zwei Speichermodulen umfasst. Dabei ist der Energiespeicher im elektrischen Sinne zwischen der Stromerzeugungsvorrichtung und dem zumindest einem Stromverbraucher verschaltet.

Die Schalteinrichtung des Energiespeichers ist dazu ausgebildet, einen direkten Stromfluss zwischen der Stromerzeugungsvorrichtung und dem zumindest einen Stromverbraucher in einer ersten Betriebssituation zu ermöglichen und in einer zweiten Betriebssituation zu unterbrechen. Ferner ist die Steuerungseinheit dazu ausgebildet, in der zweiten Betriebssituation durch Steuerung der Schalteinrichtung ein erstes Speichermodul der zwei Speichermodule des zumindest einen Energiespeicherblocks mit der Stromerzeugungsvorrichtung zu verbinden, um das erste Speichermodul zu laden, und zeitgleich ein zweites Speichermodul der zwei Speichermodule mit dem zumindest einem Stromverbraucher zu verbinden, um den zumindest einen Stromverbraucher mit dem zweiten Speichermodul zu versorgen. Die Schalteinrichtung umfasst hierzu eine Vielzah von mechanischen Schaltmitteln. Die Schalteinrichtung kann auch eine Vielzahl von elektronisch steuerbaren Schaltelementen umfassen.

Durch die Möglichkeit, einzelne Speichermodule des zumindest einen Energiespeicherblocks zu einem Zeitpunkt mittels der Stromerzeugungsvorrichtung zu laden und zeitgleich andere Speichermodule des zumindest einen Energiespeicherblocks zur Versorgung des zumindest einen Stromverbrauchers zu entladen, ergibt sich die Möglichkeit, die Anlage autark und ununterbrochen betreiben zu können, so dass der von der Vorrichtung zur Erzeugung von Wasserstoff erzeugte Wasserstoff, insbesondere schwankungsfrei, in einem kontinuierlichen Prozess produziert werden kann. Die Autarkie wird insbesondere auch dadurch erreicht, dass die erforderlichen Komponenten der Energieerzeugung, der Energiespeicherung sowie der Produktion des Wasserstoffs an einen Ort räumlich konzentriert angeordnet sind. Durch die Kombination der an sich bekannten Technologien zur Erzeugung von Wasserstoff, zur Speicherung von Strom sowie der regenerativen Erzeugung von Strom ist es möglich, die Anlage nicht nur im höchsten Maße autark zu betreiben, sondern mit der derzeitigen Netzinfrastruktur zur Verteilung von Strom ohne Änderungen auszukommen.

Insbesondere kann die Anlage ohne Netzanbindung betrieben werden, so dass beispielsweise ein Einsatz in geographischen Bereichen der Erde möglich ist, welche über keine ausgebaute öffentliche Netzinfrastruktur verfügen. Beispielsweise kann die Anlage in solchen Regionen erstellt werden, welche ein hohes Maß an regenerativ erzeugtem Strom zulässt, wie z.B. in wind- und/oder sonnenreichen Umgebungen (Süd-Europa, Nordafrika, usw.).

Dadurch, dass durch den konstruktiven Aufbau des Energiespeichers ein zeitgleiches Laden und Entladen möglich ist, ist es zudem möglich, eine Situation zu vermeiden, in der der Ladezustand aller Speichermodule zeitgleich so gering ist, dass bei ausfallenden regenerativen Energieerzeugen und keiner Verbindung der keinem Strombezug aus dem öffentlichen Stromnetz die Produktion des Wasserstoffs zum Erliegen käme. Gemäß einer zweckmäßigen Ausgestaltung ist die Steuerungseinheit dazu ausgebildet, abhängig von einem jeweiligen Ladezustand des ersten und des zweiten Speichermoduls, in der zweiten Betriebssituation durch Steuerung der Schalteinrichtung eine Umschaltung durchzuführen, um das zweite Speichermodul der zwei Speichermodule des zumindest einen Energiespeicherblocks mit der Stromerzeugungsvorrichtung zu verbinden, um das zweite Speichermodul zu laden, und zeitgleich das erste Speichermodul der zwei Speichermodule mit dem zumindest einen Stromverbraucher zu verbinden, um den zumindest einen Stromverbraucher aus dem ersten Speichermodul zu versorgen. Mit anderen Worten nimmt die Steuerungseinheit eine Umschaltung dahingehend vor, dass das entladene erste Speichermodul mittels der Stromerzeugungsvorrichtung geladen und das bislang durch die Stromerzeugungsvorrichtung geladene zweite Speichermodul nun zur Versorgung des zumindest einen Stromverbrauchers herangezogen wird. Hierdurch ist eine dauerhafte Versorgung des zumindest einen Stromverbrauchers aus der Batterie möglich.

Eine weitere Ausgestaltung sieht vor, dass die Steuerungseinheit dazu ausgebildet ist, die Anlage durchgängig in der zweiten Betriebssituation zu betreiben. Gemäß dieser Ausgestaltung ist somit vorgesehen, dauerhaft den direkten Stromflusses zwischen der Stromerzeugungsvorrichtung und dem zumindest einen Stromverbraucher zu unterbrechen. Ermöglicht wird dies durch eine geeignete Dimensionierung des Energiespeichers und die Möglichkeit, leere Speichermodule aus der Stromerzeugungsvorrichtung zu laden und volle Speichermodule zur Versorgung des zumindest einen Stromverbrauchers heranzuziehen.

Eine weitere zweckmäßige Ausgestaltung sieht vor, dass die Steuerungseinheit dazu ausgebildet ist, die Anlage in der ersten Betriebssituation zu betreiben, wenn der Ladezustand des ersten und des zweiten Speichermoduls 100 % beträgt. In diesem Fall ist es möglich, den zumindest einen Stromverbraucher unmittelbar mit der Stromerzeugungsvorrichtung zu verbinden und den Umweg über den Energiespeicher zu vermeiden. In diesem Fall lassen sich Ladeverluste und Entladeverluste des Energiespeichers umgehen.

Eine weitere zweckmäßige Ausgestaltung sieht vor, dass die Steuerungseinheit dazu ausgebildet ist, in einer dritten Betriebssituation durch Steuerung der Schalteinrichtung einen direkten Stromfluss zwischen der Stromerzeugungsvorrichtung und dem zumindest einen Stromverbraucher zu ermöglichen und zudem das erste Speichermodul der zwei Speichermodule des zumindest einen Speicherblocks mit der Speichervorrichtung zu verbinden, um das erste Speichermodul zu laden, und zeitgleich das zweite Speichermodule der zwei Speichermodule mit dem zumindest einen Stromverbraucher zu verbinden, um den zumindest einen Stromverbraucher, auch aus dem zweiten Speichermodul zu versorgen, oder umgekehrt. Diese Ausgestaltung ist zweckmäßig, wenn zu einem bestimmten Zeitpunkt durch die Stromerzeugungsvorrichtung eine größere oder wesentlich größere Energiemenge bereitgestellt werden kann, als zur Versorgung des zumindest einen Stromverbrauchers vorgesehen ist. In diesem Fall wird dies, sofern einzelne Speichermodule des Energiespeichers nicht geladen sind, genutzt, um diese auf 100 % Ladezustand (State of Charge, SoC) zu laden. Dies ermöglicht dann zu Zeiten, zu denen die Stromerzeugungsvorrichtung eine geringere oder gar keine Energieproduktion aufweist, als zur Versorgung des zumindest einen Stromverbrauchers erforderlich ist, die Versorgung des zumindest einen Stromverbrauchers aus dem Energiespeicher.

Ziel des Betriebs der Anlage ist es, den Ladezustand des Energiespeichers als Ganzes nach Möglichkeit immer geladen zu haben. Dadurch kann eine Versorgung des zumindest eines Stromverbrauchers während einer länger andauernden Zeitspanne, in der Wind und/oder Solarstrom nicht zur Verfügung stehen, sichergestellt werden. Der Energiespeicher ist so dimensioniert, dass er zwischen 10 h und 15 h den zumindest einen Stromverbraucher alleine versorgen kann.

Wird die Anlage erstmalig in Betrieb genommen, wird der Energiespeicher zu 100% geladen. Dabei werden nicht nur einzelne Speichermodule zu 100% geladen, sondern die Steuerungseinheit steuert den Ladevorgang derart, dass der gesamte Energiespeicher (mit allen seinen Speichermodulen zu 100% (SoC_{Energiespeicher} = 100%) geladen wird. Daran anschließend erfolgt die Versorgung des zumindest einen Stromverbrauchers.

Die Steuerungseinheit ist, solange Wind und/oder Solarstrom zur Verfügung stehen, zur Steuerung der Komponenten wie folgt eingerichtet:
- Der Ladezustand des Energiespeichers wird so hoch wie möglich gehalten.
- Ist der Energiespeicher vollständig geladen (SoC_{Energiespeicher} = 100%) und kann die Stromerzeugungsvorrichtung Strom aus Wind und/oder Solar zur Verfügung stellen, erfolgt die Energiezufuhr zu dem zumindest einen Stromverbraucher direkt aus der Stromerzeugungsvorrichtung (erste Betriebssituation). Der Energiespeicher wird mittels der Schalteinrichtung durch einen Bypass umgangen.
- Ist der Energiespeicher vollständig geladen (SoC_{Energiespeicher} = 100%) und kann die Stromerzeugungsvorrichtung keinen Strom aus Wind und/oder Solar zur Verfügung stellen (Wind und/oder Solar stehen nicht zu Verfügung), erfolgt die Versorgung des zumindest einen Stromverbrauchers aus dem Energiespeicher.
- Kann die Stromerzeugungsvorrichtung wieder Strom aus Wind und/oder Solar zur Verfügung stellen, wobei der Energiespeicher teilweise entladen ist (SoC_{Energiespei-cher} < 100%), erfolgt die Versorgung des zumindest einen Stromverbrauchers weiter aus dem Energiespeicher (nämlich aus einem oder mehreren zweiten Speichermodulen), wobei ein oder mehrere erste Speichermodule des Energiespeicher aus der Stromerzeugungsvorrichtung geladen werden, um den Ladezustand des Energiespeichers insgesamt zu erhöhen, mit dem Ziel eine 100% Ladekapazität zu erreichen. Dies entspricht der zweiten Betriebssituation. Ist die Energieerzeugung der Stromerzeugungsvorrichtung höher als zum Laden des Energiespeichers benötigt wird, versorgt die Stromerzeugungsvorrichtung neben dem Energiespeichers auch den zumindest einen Stromverbraucher. Dies entspricht der dritten Betriebssituation.

Um sicherzustellen, dass kein Energiespeicherblock des Energiespeichers zu einem beliebigen Zeitpunkt vollständig entleert sein kann, ist es zweckmäßig, wenn der zumindest eine Energiespeicherblock eine ungerade Anzahl von Speichermodulen umfasst. Dabei ist die Steuerungseinheit dazu ausgebildet, zu jedem Zeitpunkt eines oder mehrerer Zeitpunkte während des Betriebs der Anlage, den Ladezustand eines Speichermoduls des zumindest einen Energiespeicherblocks zu 100 % zu halten.

Es ist ferner zweckmäßig, wenn die Kapazität des Energiespeichers dimensioniert ist, den zumindest einen Stromverbraucher unterbrechungsfrei für einen Zeitraum zwischen 10 Stunden und 15 Stunden zu versorgen. Bei einer derartigen Dimensionierung kann die Anlage autark und ununterbrochen den zumindest einen alternativen Energieträger bereitstellen, ohne dass eine Netzanbindung an das öffentliche Stromnetz erforderlich wäre oder, sofern eine Netzanbindung vorhanden ist, ein Bezug von Energie aus dem öffentlichen Stromnetz erforderlich ist. Die Dimensionierung der Kapazität des Energiespeichers hängt letztendlich vom Ort, an dem die Anlage realisiert ist, ab. So kann beispielsweise im sonnen- und/oder windreichen Regionen, wie z.B. Nordafrika, die Kapazität des Energiespeichers geringer bemessen werden (z.B. mit einer 10h-Kapazität) als beispielsweise in Nordeuropa (z.B. mit einer 15h-Kapazität), wo die Stromerzeugungsvorrichtung eine geringere Anzahl an Volllaststunden erreichen wird. Die genaue Dimensionierung der Kapazität des Energiespeichers kann z.B. durch Simulationen oder Berechnungen ermittelt werden.

Gemäß einer weiteren zweckmäßigen Ausgestaltung basiert die Vorrichtung zur Erzeugung von Wasserstoff auf dem Prinzip der alkalischen Elektrolyse. Eine Vorrichtung zur Erzeugung von Wasserstoff, die auf dem Prinzip der alkalischen Elektrolyse basiert, benötigt eine durchgängige, gleichbleibende Stromversorgung, wodurch der erzeugte Wasserstoff sehr kostengünstig bereitgestellt werden kann. Dies ist bei der vorliegenden Anlage der Fall. Demgegenüber erlauben sog. PMA-Anlagen auch eine Versorgung mit volatiler Stromversorgung, sind dabei jedoch zur Erzeugung des Wasserstoffs erheblich teurer.

Es ist weiterhin zweckmäßig, wenn die Anlage eine Entsalzungsanlage zur Entsalzung von Meerwasser umfasst, die im Betrieb der Anlage der Vorrichtung zur Erzeugung von Wasserstoff entsalztes Wasser für die Elektrolyse bereitstellt. Eine solche Entsalzungsanlage kann im Zusammenspiel mit der Vorrichtung zur Erzeugung von Wasserstoff auch den Autarkiegrad erhöhen, insbesondere in solchen Regionen, in denen die Versorgung der Vorrichtung zur Herstellung von Wasserstoff mit Süßwasser, z.B. aus Grundwasserbrunnen, schwierig oder unerwünscht ist. Andererseits kann die Anlage zur autarken und ununterbrochenen Bereitstellung von Wasserstoff auch in solchen Regionen der Welt erfolgen, welche lediglich über einen Meerwasserzugang, jedoch ansonsten über keine gesicherte Wasserversorgung verfügen. Da das entsalzte Wasser kontinuierlich bereitgestellt werden kann, ist der ununterbrochene Betrieb der Vorrichtung zur Erzeugung von Wasserstoff sichergestellt.

Vorzugsweise handelt es sich bei der Entsalzungsanlage um eine solche Entsalzungsanlage, der als Prozessenergie Wärme zugeführt wird. Dabei wird als die Wärme während des Betriebs der Vorrichtung zur Erzeugung von Wasserstoff erzeugte Abwärme verwendet. Eine solche Entsalzungsanlage ist z.B. aus der DE 10 2012 201 869 A1 bekannt.

Es ist weiterhin zweckmäßig, wenn der zumindest eine Stromverbraucher einen oder mehrere der folgenden Verbraucher umfasst bzw. zugeordnet sind: eine Gasentnahmestelle zur Entnahme von Wasserstoff durch ein mit Wasserstoff betriebenes Kraftfahrzeug; einen transportablen Druckspeicher, insbesondere in Gestalt eines ISO-Containers. Der am Ort der Anlage durch die Anlage erzeugte Wasserstoff kann in komprimierter Form und in einem transportablen Speicherbehältnis (Druckspeicher) gespeichert und mittels Lastkraftwagen zu einem anderen Ort transportiert werden, um dort aus den transportablen Speicherbehältnissen (Druckspeichern) eine oder mehrere Gasentnahmestellen mit Wasserstoff zu versorgen. Unterschreitet der Füllstand in den transportablen Druckspeichern einen vorgegebenen Wert, so wird automatisch unter Zuhilfenahme von Kommunikationsmitteln und einer Kommunikation mit der Steuereinheit ein neuer transportable Druckspeicher angefordert, der dann durch den leeren oder annähernd leeren transportablen Druckspeicher ausgetauscht wird (Wechselsystem). Eine oder mehrere Gasentnahmestellen zur Entnahme von Wasserstoff, z.B. zur Versorgung eines wasserstoffbetriebenen Kraftfahrzeugs, können auch am Ort der Erzeugung des Wasserstoffs vorgesehen sein.

Gemäß einer weiteren zweckmäßigen Ausgestaltung umfasst der zumindest eine Stromverbraucher einen oder mehrere der folgenden elektrischen Verbraucher: eine Stromentnahmestelle zur Entnahme von elektrischer Energie für eine Batterie eines elektrisch oder hybrid-elektrisch betriebenen Kraftfahrzeugs; einen wiederaufladbaren, transportablen Energiespeicher als Wechselenergiespeicher, insbesondere in Gestalt eines ISO-Containers.

Der Strom für die Ladestationen wird insbesondere aus einem oder mehreren wiederaufladbaren, transportablen Energiespeichern bereitgestellt, die am Ort der Anlage durch die Anlage geladen werden. Die transportablen Energiespeicher können z.B. in Form eines ISO-Containers (auch Seefracht-Container genannt) realisiert sein. Solche ISO-Container können, nachdem der darin enthaltene Energiespeicher am Ort der Anlage durch die Anlage geladen wurde, auf einfache Weise mittels Lastkraftwagen von der Anlage zu der autarken Ladestelle transportiert und temporär gelagert werden. Aufgrund der Größe des Energiespeichers kann eine Vielzahl von Ladevorgängen von elektrisch betriebenen Fahrzeugen durchgeführt werden. Unterschreitet der transportable Energiespeicher einen vorgegebenen Ladezustand, so wird (automatisch unter Zuhilfenahme von Kommunikationsmitteln und einer Kommunikation mit der Steuereinheit) ein neuer transportable Energiespeicher angefordert, der dann durch den leeren oder annähernd leeren transportablen Energiespeicher ausgetauscht wird) Wechselsystem.

Die Stromentnahmestellen können insbesondere als sog. Schnelllader ausgebildet sein, welche das Laden des Batteriespeichers des zu ladenden Fahrzeugs in kurzer Zeit mit hoher Leistung ermöglichen. Die Stromentnahmestellen können abhängig von der mit den Kraftfahrzeugen benötigten Ladetechnologie wahlweise auf Wechselstrom (AC) oder Gleichstrom (DC) basieren. Es ist möglich, dass die Stromentnahmestellen sowohl ein Laden mit Gleichstrom als auch mit Wechselstrom ermöglichen. Gegebenenfalls können auch manche der Stromentnahmestellen eine auf Gleichstrom oder manche andere auf Wechselstrom basierende Ladetechnologie aufweisen.

Die Stromentnahmestelle ist vorzugsweise eine autarke Ladestelle (Hotspot), z.B. im urbanen Raum, wie z.B. an existierenden Tankstellen, Parkplätzen von Firmen, Geschäften oder öffentlichem Nahverkehr (Park-and-Ride). An den autarken Ladestellen sind eine oder mehrere Ladestationen für elektrisch betriebene Fahrzeuge angeordnet. In einer Ausgestaltung können an einem Hotspot alternativ oder zusätzlich auch eine oder mehrere Gasentnahmestellen für mit Wasserstoff betriebene Fahrzeuge angeordnet sein. Die genaue Anzahl der Mehrzahl an Gasentnahmestellen und/oder Stromentnahmestellen am Ort der Anlage und/oder einen jeweiligen Hotspot kann dabei flexibel an die Anzahl von mit Wasserstoff und/oder elektrischer Energie betriebenen Kraftfahrzeugen angepasst werden.

Diese Vorgehensweise ermöglicht die kostengünstige Bereitstellung von Wasserstoff und/oder Strom für Mobilitätsdienste im urbanen Raum, wobei insbesondere keine Änderung an bestehender Infrastruktur, insbesondere des öffentlichen Stromnetzes, vorgenommen zu werden braucht.

Gemäß einer weiteren Ausgestaltung ist vorgesehen, dass die Verschaltung der Stromerzeugungsvorrichtung des zumindest einen Stromverbrauchers und des Energiespeichers derart ist, dass kein Stromfluss über das öffentliche Stromnetz erfolgt. Mit anderen Worten bedeutet dies, dass der Stromfluss nahezu ausschließlich über das zur Realisierung der Anlage erforderliche "interne" Verteilnetz (Stromnetz) erfolgt.

Es wird ferner ein Verfahren zum autarken oder im Wesentlichen autarken und ununterbrochenen Bereitstellen zumindest eines alternativen Energieträgers, umfassend Wasserstoff, bereitgestellt. Die Anlage umfasst als Komponenten, die zusammen an einem Ort in räumlicher Nähe angeordnet sind: eine Stromerzeugungsvorrichtung zur Erzeugung von Strom aus regenerativen Energien, umfassend zumindest eine Windkraftanlage und/oder zumindest eine Photovoltaikanlage und/oder ein Wasserkraftwerk; zumindest einen Stromverbraucher, umfassend eine Vorrichtung zur Erzeugung von Wasserstoff durch elektrochemische Spaltung von Wasser in Wasserstoff und Sauerstoff; einen wiederaufladbaren Energiespeicher, in den von der Stromerzeugungsvorrichtung erzeugter Strom für eine Entnahme für den zumindest einen Stromverbraucher gespeichert wird, wobei der Energiespeicher eine Schalteinrichtung und zumindest einen Energiespeicherblock mit jeweils zumindest zwei Speichermodulen umfasst, wobei der Energiespeicher zwischen der Stromerzeugungsvorrichtung und den zumindest einen Stromverbraucher verschaltet ist und wobei die Schalteinrichtung dazu ausgebildet ist, einen direkten Stromfluss zwischen der Stromerzeugungsvorrichtung und den zumindest einen Stromverbraucher in einer ersten Betriebssituation zu ermöglichen und in einer zweiten Betriebssituation zu unterbrechen; und eine Steuerungseinheit zur Steuerung der Energieerzeugung der Stromerzeugungsvorrichtung, des Ladezustands des Energiespeichers und des Energieverbrauchs des Stromverbrauchers.

Durch die Steuerungseinheit werden die folgenden Schritte durchgeführt: in der zweiten Betriebssituation wird die Schalteinrichtung so gesteuert, dass ein erstes Speichermodul der zwei Speichermodule des zumindest einen Energiespeicherblocks mit der Stromerzeugungsvorrichtung verbunden ist, um das erste Speichermodul zu laden, und zeitgleich ein zweites Speichermodul der zwei Speichermodule mit dem zumindest einen Stromverbraucher verbunden wird, um den zumindest einen Stromverbraucher aus dem zweiten Speichermodul zu versorgen.

Das Verfahren weist die gleichen Vorteile auf, wie diese vorstehend in Verbindung mit der erfindungsgemäßen Anlage beschrieben wurden.

In einer zweckmäßigen Ausgestaltung schaltet die Steuerungseinheit, abhängig von einem jeweiligen Ladezustand des ersten und des zweiten Speichermoduls, in der zweiten Betriebssituation die Schalteinrichtung um, um das Speichermodul der zwei Speichermodule des zumindest einen Energiespeicherblocks mit der Stromerzeugungsvorrichtung zu verbinden, um das zweite Speichermodul zu laden, und verbindet zeitgleich das erste Speichermodul der zwei Speichermodule mit dem zumindest einen Stromverbraucher, um den zumindest einen Stromverbraucher aus dem ersten Speichermodul zu versorgen.

Insbesondere betreibt die Steuerungseinheit die Anlage durchgängig in der zweiten Betriebssituation, in der kein direkter Stromfluss zwischen der Stromerzeugungsvorrichtung und dem zumindest einen Stromverbraucher vorgesehen ist.

Gemäß einer weiteren zweckmäßigen Ausgestaltung betreibt die Steuerungseinheit die Anlage in der ersten Betriebssituation, wenn der Ladezustand des ersten und zweiten Speichermoduls 100 % beträgt. Andernfalls wird die Anlage im zweiten Betriebszustand betrieben.

Zweckmäßigerweise steuert die Steuerungseinheit in einer dritten Betriebssituation die Schalteinrichtung, um einen direkten Stromfluss zwischen der Stromerzeugungsvorrichtung und dem zumindest einen Stromverbraucher zu ermöglichen und das erste Speichermodul der zwei Speichermodule des zumindest einen Energiespeicherblocks mit der Stromerzeugungsvorrichtung zu verbinden, um das erste Speichermodul zu laden, und zeitgleich das zweite Speichermodul der zwei Speichermodule mit dem zumindest einen Stromverbraucher zu verbinden, um den zumindest einen Stromverbraucher aus dem zweiten Speichermodul zu versorgen, oder umgekehrt.

Die Erfindung wird nachfolgend näher anhand eines Ausführungsbeispiels in der Zeichnung erläutert. Es zeigen:
- Fig. 1: eine schematische Darstellung einer erfindungsgemäßen Anlage zur autarken und ununterbrochenen Bereitstellung von Wasserstoff gemäß der Erfindung; und
- Fig.2: eine schematische Darstellung eines erfindungsgemäßen Energiespeichers.

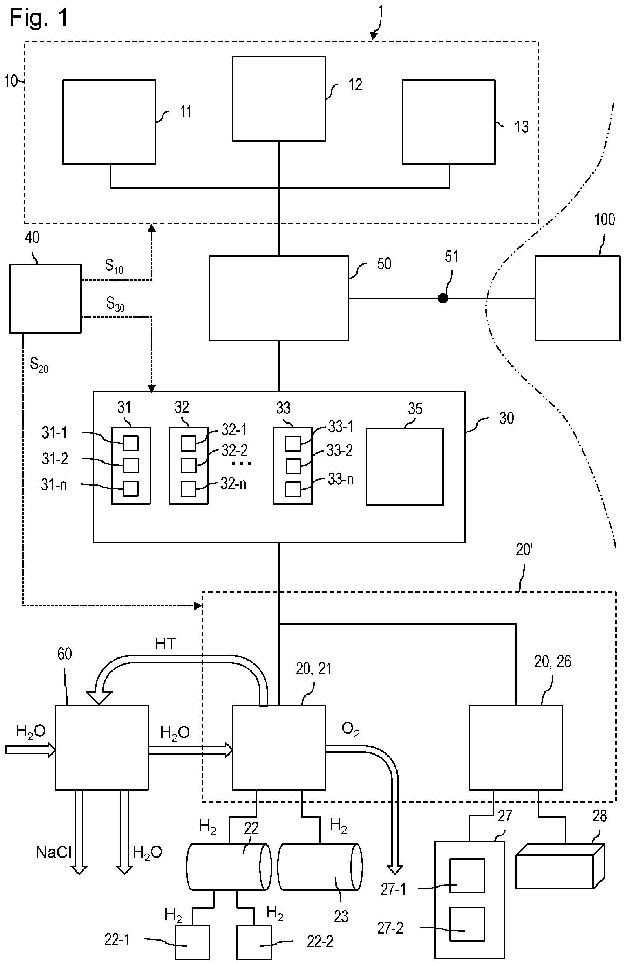

Fig. 1 zeigt eine Anlage 1 zur autarken und ununterbrochenen Bereitstellung von Wasserstoff als alternativen Energieträger. Die Anlage 1 umfasst verschiedene, nachfolgend näher im Detail beschriebene Komponenten, die zusammen an einem Ort in räumlicher Nähe angeordnet sind. Die Gesamtheit der Komponenten an diesem Ort wird als "grüne Insel" bezeichnet. Als wesentliche Komponenten umfasst die Anlage 1 eine Stromerzeugungsvorrichtung 10, einen oder mehrere Stromverbraucher 20, einen wiederaufladbaren Energiespeicher 30 sowie eine Steuerungseinheit 40.

Die Stromerzeugungsvorrichtung 10 erzeugt Strom aus regenerativen Energien. Hierzu umfasst die Stromerzeugungsvorrichtung 10 in diesem Beispiel zumindest eine Windkraftanlage 11, zumindest eine Photovoltaikanlage 12 und zumindest ein Wasserkraftwerk 13 als Erzeuger. Eine jeweilige Windkraftanlage 11 kann eine oder mehrere (nicht im Detail dargestellte) Windturbinen umfassen. Eine jeweilige Photovoltaikanlage 12 umfasst eine beliebige Anzahl von Photovoltaikmodulen, die wahlweise auf Dachflächen von Gebäuden und/oder auf Freiflächen realisiert sind. Ein Wasserkraftwerk kann z.B. eine Laufwasseranlage und dergleichen umfassen. Die Stromerzeugungsvorrichtung 10 kann eine beliebige Kombination der genannten Stromerzeuger umfassen. Die Erzeuger speisen den von ihnen erzeugten Strom an einem gemeinsamen Einspeisepunkt in das "interne" Verteilnetz der Anlage 1 ein.

Einer der Stromverbraucher 20 ist eine Vorrichtung 21 zur Erzeugung von Wasserstoff durch elektrochemische Spaltung von Wasser in Wasserstoff und Sauerstoff. Die Vorrichtung 21 zur Erzeugung von Wasserstoff durch elektrochemische Spaltung von Wasser in Wasserstoff und Sauerstoff stellt eine Elektrolyseanlage bzw. einen Elektrolyseur dar. Die Vorrichtung 21 zur Erstellung von Wasserstoff basiert bevorzugt auf dem Prinzip der alkalischen Elektrolyse, durch die Wasserstoff zu günstigen Kosten produziert werden kann. Voraussetzung für den Einsatz der alkalischen Elektrolyse ist, dass die Vorrichtung 21 zur Erzeugung von Wasserstoff kontinuierliche und gleichbleibende den dazu erforderlichen Strom bereitstellt.

Der von der Vorrichtung 21 zur Erzeugung von Wasserstoff erzeugte Wasserstoff wird in einem oder mehreren Druckspeichern gespeichert. Beispielhaft sind in Fig. 1 zwei Druckspeicher 22, 23 gezeigt. Mit dem Druckspeicher 22, der ortsfest ist, sind beispielhaft zwei Gasentnahmestellen 22-1, 22-2 verbunden, an welchen Wasserstoff von Verbrauchern, insbesondere von mit Wasserstoff betriebenen Fahrzeugen, entnommen werden können. Demgegenüber ist der Druckspeicher 23 ein transportables Speicherbehältnis, das mittels Lastkraftwagen zu einer autarken Ladestelle von Verbrauchern transportiert werden kann. Dort können aus den transportablen Speicherbehältnissen ortsfeste Gasentnahmestellen mit Wasserstoff versorgt werden. Unterschreitet der Füllstand im transportablen Speicherbehältnis einen vorgegebenen Wert, so wird automatisch unter Zuhilfenahme von (hier nicht gezeigten Kommunikationsmitteln und einer Kommunikation mit der Steuereinheit 40) ein neues transportables Speicherbehältnis angefordert, das dann durch das leere oder annähernd leere transportable Speicherbehältnis ausgetauscht wird. Der Druckspeicher 23 ist somit Teil eines Wechselsystems.

Es versteht sich, dass die Anzahl der ortsfesten Druckspeicher 22 auch größer als eins sein kann. Ebenso kann die Anzahl der transportablen Druckspeicher 23, die der Vorrichtung 21 zur Erzeugung von Wasserstoff zugeordnet sind, größer als eins sein.

Ein weiterer Stromverbraucher 20 ist im vorliegenden Ausführungsbeispiel eine Stromabnahmeeinheit 26. Die Stromabnahmeeinheit 26 ist in diesem Ausführungsbeispiel mit einer am Ort der Anlage 1 befindlichen Ladestation 27 und einem transportablen Energiespeicher 28 gekoppelt, welche jeweils Stromsenken darstellen. Die Ladestation 27 umfasst eine Anzahl an Ladepunkten 27-1, 27-2, wobei die Anzahl der Ladepunkte beliebig ist (d.h. ≥ 1). An jeweiligen Ladepunkten 27-1, 27-2 können elektrisch betriebene Kraftfahrzeuge aufgeladen werden.

Unter elektrisch betriebenen Fahrzeugen sind solche Fahrzeuge zu verstehen, welche zumindest einen Elektromotor als Antriebsquelle umfassen. Hierunter fallen rein Batterie-elektrisch betriebene Fahrzeuge, hybrid-elektrisch betriebene Fahrzeuge, welche neben einem Elektromotor auch einen Verbrennungsmotor als Antriebsquelle umfassen. Auch der Begriff der Kraftfahrzeuge ist weit zu verstehen. Hierunter fallen Personenkraftfahrzeuge, Lastkraftfahrzeuge, zweispurige Fahrzeuge, einspurige Fahrzeuge (Motorräder, Roller) sowie Luftfahrzeuge.

Die Ladepunkte 27-1, 27-2 stellen Stromentnahmestellen dar, die die gleichzeitige Entnahme von Strom durch elektrische oder hybrid-elektrisch betriebene Kraftfahrzeuge ermöglicht. Die Stromentladestellen können als sog. Schnelllader ausgebildet sein, welche das Laden eines jeweiligen Batteriespeichers des zu ladenden Fahrzeugs in kurzer Zeit in hoher Leistung ermöglichen. Die Stromentnahmestellen können dabei abhängig von der von den Kraftfahrzeugen benötigten Ladetechnologie wahlweise auch Wechselstrom (AC) oder Gleichstrom (DC) basieren. Es ist möglich, dass die Stromentnahmestellen sowohl ein Laden mit Gleichstrom als auch mit Wechselstrom ermöglichen. Gegebenenfalls können auch manche der Stromentnahmestellen lediglich eine auf Gleichstrom oder manche andere eine auf Wechselstrom basierende Ladetechnologie aufweisen.

Der transportable Energiespeicher 28 wird am Ort der Stromabnahmeeinheit 26 durch die Anlage 1 geladen. Die transportablen Energiespeicher 28 können z.B. in Form eines ISO-Containers (auch Seefracht-Container genannt) realisiert sein. Solche ISO-Container können, nachdem der darin enthaltene transportable Energiespeicher 28 am Ort der Anlage 1 durch deren Stromerzeuger geladen wurde, auf einfache Weise mittels Lastkraftwagen von der Anlage zu der autarken Ladestelle transportiert und temporär gelagert werden. Aufgrund der Größe des transportablen Energiespeichers 28 kann eine Vielzahl von Ladevorgängen von elektrisch betriebenen Fahrzeugen durchgeführt werden. Unterschreitet der transportable Energiespeicher 28 einen vorgegebenen Ladezustand, so wird (automatisch unter Zuhilfenahme von nicht gezeigten Kommunikationsmitteln und einer Kommunikation mit der Steuereinheit 40) ein neuer transportabler Energiespeicher 28 angefordert, der dann durch den leeren oder annähernd leeren transportablen Energiespeicher 28 ausgetauscht wird (Wechselsystem). Von daher sind - entgegen der zeichnerischen Darstellung - vorzugsweise mehrere transportable Energiespeicher 28 mit der Stromabnahmeeinheit 26 gekoppelt.

Die Gesamtheit aller Stromverbraucher 20 (umfassend die Vorrichtung 21 zur Erzeugung von Wasserstoff und die Stromabnahmeeinheit 26) ist zeichnerisch als Stromverbraucher 20' dargestellt.

Während ihres Betriebs erzeugt die Vorrichtung 21 zur Erzeugung von Wasserstoff Wärme HT, die üblicherweise in die Umgebung abgegeben wird. Die hier beschriebene Anlage umfasst zur Nutzung der Abwärme HT eine Entsalzungsanlage 60. Die Entsalzungsanlage 60 verwendet während des Betriebs der Vorrichtung 21 erzeugte Abwärme als Prozessenergie. Dadurch ist die Entsalzungsanlage 60 in der Lage, aus Meerwasser (linker Pfeil H₂O) entsalztes Wasser (Pfeil nach rechts, H₂O) zu produzieren und der Vorrichtung 21 zur Erzeugung von Wasserstoff zuzuführen, damit dieses mit Hilfe von Strom elektrochemisch in Wasserstoff und Sauerstoff aufgespaltet werden kann. Nicht von der Vorrichtung 21 zur Erzeugung von Wasserstoff benötigtes Wasser kann als Trinkwasser (Pfeil nach unten, H₂O) verwendet werden. Das durch die Entsalzung gewonnene Salz (Pfeil nach unten, NaCl) kann ebenfalls einer weiteren Verwertung zugeführt werden.

Eine solche Entsalzungsanlage ist insbesondere beim Einsatz der Anlage 1 in Küstengebieten von Vorteil, da der Vorrichtung 21 zur Erzeugung von Wasserstoff dann kein Grundwasser zur Verfügung gestellt werden muss. Darüber hinaus kann durch die Entsalzungsanlage in Küstengebieten und insbesondere wasserarmen Regionen Brauchwasser bzw. Nutzwasser zur Verfügung gestellt werden.

Das Prinzip der Entsalzungsanlage 60 basiert auf der sog. Multieffektdestillation (MED) und nutzt eine Mehrzahl von Effektblechen. Das Prinzip der Entsalzungsanlage ist beispielsweise in der DE 10 2012 201 869 A1 beschrieben. Sollte die von der Vorrichtung 21 bereitgestellte Abwärme zum Betrieb der Entsalzungsanlage 60 nicht ausreichen, so kann zusätzlich der Einsatz von Solarkollektoren zweckmäßig sein. Die MED nutzt auf der warmen Seite Prozesstemperaturen von etwa 60-63°C und auf der kalten Seite kaltes Seewasser, das in der Regel zwischen 10°C und 15°C beträgt. Auch kältere Temperaturen sind von der Entsalzungsanlage 60 verarbeitbar. In einem Verdampfer wird dann bei ca. 60°C Dampf erzeugt. An einem ersten Effektblech kondensiert der Dampf zu Wasser, dessen Kondensations-Enthalpie dann für den Verdampfungsprozess im ersten Effekt genutzt wird. Die Temperatur im ersten Effekt ist etwas niedriger als ein Verdampfer. In weiteren Effekten wird dann die jeweilige Kondensationsenergie vom Vorgängereffekt immer wieder zum Verdampfen des Wassers im jeweiligen Effekt genutzt, bis im letzten Effekt die Kühlwassertemperatur erreicht wird, die wiederum vom Kühler bereitgestellt wird. Diese Energie wird zum Verdampfen eingesetzt und durch Kondensation und Verdampfen in Folge-Effekten mehrfach genutzt.

Die Entsalzungsanlage 60 ist modular aufgebaut, wobei die Anzahl der Effekte durch die Temperaturspreizung zwischen heißer und kalter Seite bestimmt ist. Beispielsweise kann eine Entsalzungsanlage 60 mit wenigen Effekten realisiert sein, bei der die Temperaturspreizung ca. 10°C beträgt. Je höher die Temperaturspreizung ist, umso höher ist die Anzahl der Effekte. Eine Verdampfung ist bei 20°C genauso möglich, wie bei 30°C oder bei 40°C bis die oben genannten 60°C erreicht werden. Die Sole kann bis vor die Grenze der Auskristallisierung des im Meerwasser enthaltenen Salzes in der Sole genutzt werden. Durch einen nachgelagerten Prozess der Entsalzungsanlage 60 kann die Sole getrocknet werden (Zero Liquid Discharge), so dass am Ende nur das Salz (NaCl) über bleibt.

Der Energiespeicher 30 dient dazu, von der Stromerzeugungsvorrichtung 10 erzeugten Strom für eine Entnahme durch den zumindest einen Stromverbraucher 20 zu speichern. Zu diesem Zweck ist der Stromverbraucher 30 zwischen der Stromerzeugungsvorrichtung 10 und dem zumindest einen Stromverbraucher 20 verschaltet. Um ggf. etwaige Spannungsunterschiede zwischen den Stromerzeugern der Stromerzeugungsvorrichtung 10 und dem Energiespeicher 30 aneinander anpassen zu können, ist es zweckmäßig, wenn ein Umspannwerk 50 zwischen der Stromerzeugungsvorrichtung 10 und dem Energiespeicher 30 vorgesehen ist.

Je nach der geographischen Region, in der die Anlage 1 realisiert ist, kann die Anlage 1 an einem Netzeinspeisepunkt 51 mit einem öffentlichen Stromnetz 100 verbunden sein. Der Netzeinspeisepunkt 51 ist dabei bevorzugt mit dem Umspannwerk 50 gekoppelt, das dazu ausgebildet ist, etwaige Spannungsunterschiede angleichen zu können.

Es ist zu betonen, dass der Betrieb der Anlage 1 zur autarken und ununterbrochenen Bereitstellung von Wasserstoff ohne Anbindung an das öffentliche Stromnetz 100 möglich ist, insbesondere in Regionen, in denen die Erzeugung von Strom aus regenerativen Energien problemlos möglich ist, wie z.B. Südeuropa, Afrika und dem Mittleren Osten. In anderen geographischen Regionen, wie z.B. Nordeuropa oder Deutschland, ist hingegen teilweise eine Anbindung an das öffentliche Stromnetz gesetzlich vorgeschrieben, auch wenn die Anlage 1 autark zu betreiben wäre.

Der wiederaufladbare Energiespeicher 30 umfasst eine Schalteinrichtung 35 mit mechanischen und/oder elektrischen, nicht dargestellten Schaltelementen und zumindest einen Energiespeicherblock 31, 32, 33 mit jeweils zumindest zwei Speichermodulen 31-1, ..., 31-n, 32-1, ..., 32-n, 33-1, ..., 33-n. Die Anzahl n der Speichermodule eines jeweiligen Energiespeicherblocks 31, 32, 33 ist bevorzugt ungerade, d.h. n = 3, 5, 7, 9, .... Die Schalteinrichtung 35 kann integraler Bestandteil des Energiespeichers 30, wie in Fig. 1 schematisch gezeigt, oder eine davon außerhalb befindliche Schalteinrichtung sein. Wie erwähnt, ist der Energiespeicher 30 prinzipiell zwischen der Stromerzeugungsvorrichtung 10 und dem zumindest einen Stromverbraucher 20 verschaltet.

Die Steuerungseinheit 40 dient zur Steuerung der Energieerzeugung der Stromerzeugungsvorrichtung 10, des Ladezustands des Energiespeichers 30 bzw. der darin enthaltenen jeweiligen Speichermodule sowie des Energieverbrauchs des Stromverbrauchers 20. Dazu werden geeignete Steuersignale s₁₀, s₂₀, s₃₀ an die betreffenden Komponenten ausgegeben.

Die Schalteinrichtung 35 ist dazu ausgebildet, einen direkten Stromfluss zwischen der Stromerzeugungsvorrichtung 10 und den Stromverbrauchern 20 zu ermöglichen (erste Betriebssituation) oder zu unterbrechen (zweite Betriebssituation). Dabei werden, um eine Versorgung der Stromverbraucher sicherzustellen, in der zweiten Betriebssituation jeweilige erste Speichermodule eines oder mehrerer Energiespeicherblöcke 31, 32, 33 mit der Stromerzeugungsvorrichtung 10 verbunden, um die jeweiligen ersten Speichermodule zu laden. Zeitgleich werden jeweilige zweite Speichermodule der betreffenden oder anderer Energiespeicherblöcke mit dem Stromverbraucher 20 verbunden, um den oder die Stromverbraucher 20 aus den jeweiligen zweiten Speichermodulen 1 mit Energie zu versorgen.

Die Schalteinrichtung umfasst hierzu nicht näher dargestellte mechanische Schaltmittel. Mechanische Schaltmittel können z.B. mittels Aktuatoren bewegliche Stromschienen umfassen, die unterschiedliche Gruppen von Speichermodulen miteinander verbinden. Um unterschiedliche Gruppen von Speichermodulen elektrisch miteinander zu verbinden, kann die Schalteinrichtung über eine Vielzahl von individuell verbindbaren Stromschienen verfügen. Die Schalteinrichtung kann auch, ebenfalls nicht im Detail dargestellte, elektronische steuerbare Schaltelemente umfassen. Auch eine Kombination von mechanischen Schaltmitteln und elektronisch steuerbaren Schaltelementen ist denkbar.

Beispielsweise werden in der zweiten Betriebssituation das Speichermodul 31-1 des Energiespeicherblocks 31 und das Speichermodul 32-2 des Energiespeicherblocks 32 als jeweilige erste Speichermodule mit der Stromerzeugungsvorrichtung 10 verbunden, um die genannten Speichermodule 31-1, 32-2 zu laden. Zeitgleich werden in diesem Beispiel das Speichermodul 31-2 des Energiespeicherblocks 31 und das Speichermodul 32-1 des Energiespeicherblocks 32 als jeweilige zweite Speichermodule mit dem Stromverbraucher 20 verbunden, um den oder die Stromverbraucher 20 aus den jeweiligen zweiten Speichermodulen 31-2, 32-1 mit Energie zu versorgen.

Es erfolgt somit in der zweiten Betriebssituation ein zeitgleiches Laden und Entladen des Energiespeichers 30. Ermöglicht wird dies dadurch, dass der Energiespeicher 30 eine Vielzahl von Energiespeicherblöcken 31, 32, 33 umfasst, wobei jeder Energiespeicherblock 31, 32, 33 wiederum jeweils zumindest zwei Speichermodule umfasst. Die Anzahl der Speichermodule eines jeweiligen Energiespeicherblocks 31, 32, 33 ist dabei vorzugsweise ungerade, wobei mindestens einer der jeweiligen Energiespeicherblöcke in einem vollen Ladezustand (State of Charge, SoC = 100 %) gehalten wird.

Sind die zunächst zur Versorgung des oder der Stromverbraucher 20 genutzten und schließlich entladenen Speichermodule 31-1, 32-2 leer bzw. unterschreiten diese jeweils einen vorgegebenen Ladezustand (SoC), so erfolgt eine Umschaltung mittels der Schalteinrichtung 35, so dass die entladenen Speichermodule 31-1, 32-2 mit der Stromerzeugungsvorrichtung 10 verbunden und die anderen, vollen Speichermodule 31-2, 32-1 oder 31-n, 32-n zur Versorgung des oder der Stromverbraucher 20 herangezogen werden.

Die Überwachung der Ladezustände der Speichermodule 31-1, ..., 31-n, 32-1, ..., 32-n, 33-1, ..., 33-n erfolgt durch die Steuerungseinheit 40, so dass sichergestellt ist, dass eine dauerhafte Versorgung des oder der Stromverbraucher 20 aus dem Zusammenspiel der Stromerzeugungsvorrichtung 10 und dem wiederaufladbaren Energiespeicher 30 erfolgen kann. Um eine dauerhafte Versorgung des oder der Stromverbraucher 20 sicherstellen zu können, ist die Kapazität des Energiespeichers 30 so dimensioniert, dass der oder die Stromverbraucher 20 - abhängig vom geographischen Ort der Anlage 1 - unterbrechungsfrei für einen Zeitraum zwischen 10 Stunden (sonnen- und/oder windreiche Regionen) und 15 Stunden (Regionen mit geringerer Sonnenscheindauer und/oder Wind) versorgt werden können.

Um die dauerhafte Versorgung des oder der Verbraucher 20 realisieren zu können, ist der Energiespeicher 30 als Parallelschaltung (teilweise auch als Kaskade bezeichnet) aufgebaut, wobei jeder einzelne Energiespeicherblock 31, 32, 33 durch das Vorhandensein einer Mehrzahl von jeweiligen Speichermodulen 31-1, ..., 31-n, 32-1, ..., 32-n, 33-1, ..., 33-n gleichzeitig geladen und entladen werden kann. Dies hat den Vorteil, dass zeitgleich neben dem Prozess, dass die Stromerzeugungsvorrichtung 10 Energie an den oder die Stromverbraucher 20 liefert, auch der Energiespeicher 30 geladen und entladen werden kann.

Dies ist insbesondere in einer dritten Betriebssituation durch Steuerung der Schalteinrichtung möglich, so dass über einen in Fig. 1 zeichnerisch nicht explizit dargestellten Bypass ein direkter Stromfluss zwischen der Stromerzeugungsvorrichtung 10 und dem zumindest einen Stromverbraucher 20' ermöglicht ist und gleichzeitig das selektive Laden oder Entladen einzelner Speichermodule 31-1, ..., 31-n, 32-1, ..., 32-n, 33-1, .., 33-n ermöglicht ist. Auf diese Weise ist sichergestellt, dass immer eine ausreichende Anzahl von Speichermodulen 31-1, ..., 31-n, 32-1, ..., 32-n, 33-1, ..., 33-n einen ausreichenden Ladezustand erreicht, so dass für den genannten Zeitraum von 10 Stunden bis 15 Stunden auch bei einem tages- oder jahreszeitlich bedingten Ausfall der Stromproduktion durch die Stromerzeugungsvorrichtung die Versorgung des oder der Stromverbraucher 20 aus dem Energiespeicher 30 ermöglicht ist.

Die Verschaltung des Energiespeichers 30 und der Stromerzeugungsvorrichtung 10 ist vorzugsweise derart, dass kein Stromfluss über das öffentliche Stromnetz 100 erfolgt. Der Stromfluss wird vorzugsweise ausschließlich über das Verteilnetz der Anlage 1 (grüne Insel) vorgenommen. Falls es aufgrund der Gegebenheiten in bestimmten geographischen Regionen erforderlich ist, kann der Energiespeicher 30 bei prognostizierten schwachem Wind- und Sonnenaufkommen mit Energie aus dem Handel im Regelmarkt zum Null-Tarif beladen werden, um Schwächen regenerativer Energieerzeugung auszugleichen. Die Steuerungseinheit 40 ermöglicht dabei einen Ausgleich des unsteten Angebots von Wind- und Sonnenstrom und dadurch eine Entlastung des öffentlichen Stromnetzes 100.

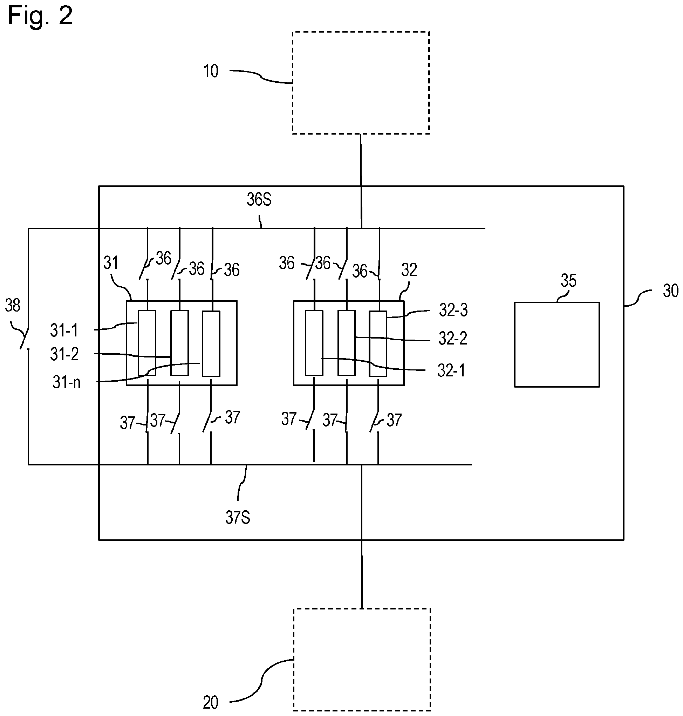

Fig. 2 zeigt eine sehr schematisierte Darstellung des Energiespeichers 30. In diesem Beispiel umfasst der Energiespeicher 30 zur vereinfachten Darstellung lediglich zwei Energiespeicherblöcke 31 und 32, die jeweils die Mehrzahl von jeweiligen Speichermodulen 31-1, ..., 31-n, 32-1, ..., 32-n umfassen. Aus Gründen der Darstellung sind die Speichermodule 31-1, ..., 31-n, 32-1, ..., 32-n hier nebeneinander dargestellt. Jedes der Speichermodule 31-1, ..., 31-n, 32-1, ..., 32-n ist mit einem jeweiligen, durch die Schalteinrichtung 35 steuerbaren Schaltelement 36 an eine gemeinsame Sammelschiene 36S geschaltet. Die Steuerleitungen sind zur übersichtlicheren Darstellung nicht gezeigt. Die Sammelschiene 36S ist mit der Stromerzeugungsvorrichtung 10 verbunden. In entsprechender Weise ist jedes der Speichermodule 31-1, .., 31-n, 32-1, ..., 32-n ist mit einem jeweiligen, durch die Schalteinrichtung 35 steuerbaren Schaltelement 37 an eine gemeinsame Sammelschiene 37S geschaltet. Die Steuerleitungen sind zur übersichtlicheren Darstellung nicht gezeigt. Die Sammelschiene 37S ist mit dem zumindest einen Stromverbraucher 20 (bzw. 20' aus Fig. 1) verbunden. Zudem ist ein durch die Schalteinrichtung 35 steuerbares Schaltelement 38 mit den Sammelschienen 36S und 37S verbunden. Das Schaltelement 38 stellt ein Bypass-Schaltelement dar. Auch hier ist die Steuerleitung zur übersichtlicheren Darstellung nicht gezeigt.

Die Schaltelemente 36, 37 sind unabhängig voneinander durch die Schalteinrichtung 35 leitend oder sperrend schaltbar, wobei ein jeweiliges Speichermodul 31-1, ..., 31-n, 32-1, ..., 32-n elektrisch wahlweise mit der Sammelschiene 36S oder mit der Sammelschiene 37S verbunden ist. Das Schaltelement 38 ist zudem unabhängig von den den anderen Schaltelementen 36, 37 schaltbar.

In dem hier gezeigten Beispiel sind die Speichermodule 31-1 und 32-2 mit der Sammelschiene 37S verbunden, da die zugeordneten Schaltelemente 36 sperrend und die zugeordneten Schaltelemente 37 leitend geschaltet sind. Die Speichermodule 31-1 und 32-2 versorgen damit den zumindest einen Stromverbraucher 20. Gleichzeitig sind die Speichermodule 31-3 und 32-3 mit der Sammelschiene 36S verbunden, da die zugeordneten Schaltelemente 36 leitend und die zugeordneten Schaltelemente 37 sperrend geschaltet sind. Die Speichermodule 31-3 und 32-3 werden damit von der Stromerzeugungsvorrichtung geladen (erster Betriebszustand). Die Speichermodule 31-2 und 32-1 sind mit keiner der Sammelschienen 36S, 37S verbunden. Diese weisen einen Ladezustand von 100% auf. Das Schaltelement 38 ist sperrend geschaltet.

Die Stellung der Schaltelemente 36, 37 und 38 ist abhängig vom Betriebszustand der Anlage 1. Ziel des Betriebs der Anlage 1 ist es, den Energiespeicher 30 als Ganzes nach Möglichkeit immer geladen zu haben (SoC_{Energiespeicher} = 100%). Dadurch kann eine Versorgung des zumindest eines Stromverbrauchers 20 während einer länger andauernden Zeitspanne, in der Wind und/oder Solarstrom nicht zur Verfügung stehen, sichergestellt werden. Der Energiespeicher 30 ist vorzugsweise so dimensioniert, dass er zwischen 10 h und 15 h den zumindest einen Stromverbraucher 20 alleine, d.h. ohne auch nur temporäre Versorgung über die Stromerzeugungsvorrichtung 10, versorgen kann.

Wird die Anlage erstmalig in Betrieb genommen, wird der Energiespeicher 30 zunächst zu 100% geladen. Dabei werden nicht nur einzelne Speichermodule 31-1, ..., 31-n, 32-1, ..., 32-n zu 100% geladen, sondern die Steuerungseinheit 40 steuert den Ladevorgang derart, dass der gesamte Energiespeicher 30 (mit allen seinen Speichermodulen 31-1, ..., 31-n, 32-1, ..., 32-n zu 100% (SoC_{Energiespeicher} = 100%) geladen wird. Daran anschließend erfolgt die Versorgung des zumindest einen Stromverbrauchers 20.

Die Steuerungseinheit 40 (siehe Fig. 1) ist, solange Wind und/oder Solarstrom zur Verfügung stehen, zur Steuerung der Komponenten wie folgt eingerichtet:
Der Ladezustand des Energiespeichers 30 wird so hoch wie möglich gehalten.

Ist der Energiespeicher 30 vollständig geladen (SoC_{Energiespeicher} = 100%) und kann die Stromerzeugungsvorrichtung 10 Strom aus Wind und/oder Solar zur Verfügung stellen, erfolgt die Energiezufuhr zu dem zumindest einen Stromverbraucher 20 direkt aus der Stromerzeugungsvorrichtung 10 (erste Betriebssituation). Der Energiespeicher 30 wird mittels der Schalteinrichtung durch das Schließen (leitend Schalten) des Bypass-Schaltelements 38 umgangen. Die Schaltelemente 36, 37 sind sperrend geschaltet.

Ist der Energiespeicher 30 vollständig geladen (SoC_{Energiespeicher} = 100%) und kann die Stromerzeugungsvorrichtung 10 keinen Strom aus Wind und/oder Solar zur Verfügung stellen (Wind und/oder Solar stehen nicht zu Verfügung), erfolgt die Versorgung des zumindest einen Stromverbrauchers 20 aus dem Energiespeicher 30. Die Stellung des Schaltelemente 36, 37, 38 kann z.B., wie in Fig. 2 gezeigt, gewählt sein.

Kann die Stromerzeugungsvorrichtung 10 wieder Strom aus Wind und/oder Solar zur Verfügung stellen, wobei der Energiespeicher 30 teilweise entladen ist (SoC_{Energiespei-cher} < 100%), erfolgt die Versorgung des zumindest einen Stromverbrauchers 20 weiter aus dem Energiespeicher 30 (nämlich aus einem oder mehreren zweiten Speichermodulen 31-1, ..., 31-n, 32-1, ..., 32-n), wobei ein oder mehrere erste Speichermodule des Energiespeichers aus der Stromerzeugungsvorrichtung geladen werden, um den Ladezustand des Energiespeichers insgesamt zu erhöhen, mit dem Ziel eine 100% Ladekapazität zu erreichen. Dies ist in Fig. 2 der Fall. Dies entspricht der zweiten Betriebssituation.

Ist die Energieerzeugung der Stromerzeugungsvorrichtung höher als zum Laden des Energiespeichers benötigt wird, versorgt die Stromerzeugungsvorrichtung neben dem Energiespeichers auch den zumindest einen Stromverbraucher. Dies entspricht der dritten Betriebssituation. In diesem Fall ist das Bypass-Schaltelement 38 nicht, wie Fig. 2 zeigt, sperrend, sondern leitend geschaltet.

Die Anforderung und Ausgestaltung der Anlage 1 unterscheidet sich je nach geographischer Region.

### Nordeuropa

In Nordeuropa ist eine Nutzung in den Sektoren Industrie, Privat und Mobilität angedacht. Hier ist eine Dimensionierung der Anlage 1 aufgrund der topographischen Gegebenheiten, wie z.B. einer dichten Bebauung im urbanen Raum, sowie einer geringen Energiedichte (W/m²) für Wind- und Solareinstrahlung derart, dass eine dauerhafte autarke Versorgung der Stromverbraucher nur unter überdimensionierter Auslegung des Energiespeichers 30 möglich wäre. Um dies zu vermeiden, ist vorzugsweise der Handel im Intraday- sowie Netzstabilitätsmarkt einzubeziehen.

Die Steuerungseinheit 40 verfügt über die Möglichkeit über eine Datenschnittstelle mit externen Dienstleistern, insbesondere mit Energieversorgungsnetzbetreibern somit mit Wetterdiensten zur Vorhersage der Leistung der Stromerzeugungsvorrichtung zur Stromerzeugung, zu kommunizieren.

Dies ermöglicht die Berücksichtigung von Regelenergie (Primär- und Sekundärreserve). Mit dieser allgemein als "Smart Grid" bezeichneten Funktionalität kann auf einfache Weise das öffentliche Stromnetz 100 effektiv entlastet werden. So kann beispielsweise an einem sonnigen Tag aufgrund der sehr hohen Netzeinspeisung von existierenden Photovoltaikanlagen bei gleichzeitig niedrigem Stromverbrauch ein Überangebot im lokalen/überregionalen Stromnetz vorhanden sein, welches der Netzbetreiber nicht effizient ausgleichen kann. In diesem Fall kann der Energiespeicher, wenn er einen niedrigen Ladezustand aufweist, mit aus dem öffentlichen Stromnetz 100 bezogenen Strom aufgeladen werden. Das öffentliche Stromnetz 100 wird dadurch effektiv entlastet.

Aufgrund des für die beschriebenen Komponenten erforderlichen Flächenverbrauchs der Anlage ist eine Realisierung im urbanen Raum mit Schwierigkeiten verbunden. Um im urbanen Raum, z.B. in Städten, Abnehmer mit Wasserstoff und elektrischer Energie versorgen zu können, ohne auf das öffentliche Stromnetz 100 zurückgreifen zu müssen, ist vorgesehen, im urbanen Raum autarke Ladestellen (Hotspots) vorzusehen. Diese können z.B. an existierenden Tankstellen, Parkplätzen von Firmen, Geschäften oder öffentlichen Nahverkehr (Park-and-Ride) realisiert werden. An den autarken Ladestellen sind dann eine oder mehrere Ladestationen für elektrisch betriebene Fahrzeuge und/oder ein oder mehrere Gasentnahmestellen für mit Wasserstoff betriebene Fahrzeuge angeordnet. Die Versorgung mit Strom bzw. Wasserstoff erfolgt mit Hilfe des eingangs beschriebenen Wechselsystems des transportablen Druckspeichers 23 sowie des transportablen Energiespeichers 28. Dieses System ermöglicht die kostengünstige Bereitstellung von Strom und Wasserstoff für Mobilitätsdienste auch im urbanen Raum, wobei insbesondere keine Änderung an bestehender Infrastruktur, insbesondere des öffentlichen Stromnetzes, vorgenommen zu werden braucht.

Es ist zweckmäßig, wenn die Stromerzeugungsvorrichtung und die Stromverbraucher unter Berücksichtigung einer erwarteten Gasentnahme und/oder einer erwarteten Stromentnahme derart dimensioniert sind, dass ein energie-autarker Betrieb der Anlage an 90 % der Jahrestage ermöglicht ist. Die Dimensionierung der verschiedenen Komponenten erfolgt vorzugsweise derart, dass ein energie-autarker Betrieb der Anlage nicht zu 100 % möglich ist, da dies zu einer starken Überdimensionierung der jeweiligen Komponenten führen würde. Da in der genannten Region aus gesetzlichen Gründen ohnehin eine Anbindung an das öffentliche Stromnetz erforderlich ist, kann an einer bestimmten Anzahl von Jahrestagen auch ein nicht-energie autarker Betrieb der Anlage akzeptiert werden. Die Dimensionierung der Komponenten sowie der Grad der erwünschten Energieautarkie in Bezug auf eine Anzahl von Tagen im Jahr kann durch Modellrechnungen, Versuche und dergleichen bestimmt werden. Insbesondere können dabei auch ökonomische Überlegungen einbezogen werden. Eine in diesem Sinne mögliche Dimensionierung der Komponenten wäre z.B. wie folgt: 4,4 MW Elektrolyse, 20 MW Photovoltaikanlage, 20 MW Windkraftanlage, 100 MWh Batterie.

Eine andere Ausgestaltung sieht vor, dass die Verschaltung des wiederaufladbaren Energiespeichers, der Stromerzeugungsvorrichtung und der Stromverbraucher derart ist, dass kein Stromfluss über das öffentliche Stromnetz erfolgt. Dies bedeutet mit anderen Worten, dass der Stromfluss nahezu ausschließlich über das private Verteilnetz, welches zu der vorgeschlagenen Anlage zur autarken Bereitstellung von Energieträgern gehört, fließt.

Die Anzahl der Stromentnahmestellen beträgt gemäß einer zweckmäßigen Ausgestaltung zwischen 10 und 20, wobei in diesem Fall die Stromerzeugungsvorrichtung eine installierte Leistung zwischen 5 MW und 15 MW und der wiederaufladbare Energiespeicher eine Kapazität von 120 MWh aufweist. Es ist zu bemerken, dass die installierte Leistung der Stromerzeugungsvorrichtung sich aufteilt auf eine oder mehrere Windkraftanlagen und eine oder mehrere Photovoltaikanlagen und eine Wasserkraftanlage. Das Verhältnis der installierten Leistung zwischen Windkraftanlage und Photovoltaikanlage beträgt vorzugsweise zwischen 2 zu 1 und 1 zu 2. Es hat sich herausgestellt, dass bei einer Dimensionierung dieser Größenordnung, ein weitestgehend energieautarker Betrieb der Anlage möglich ist. Eine zweckmäßige Ausgestaltung sieht vor, dass die Vorrichtung zur Erzeugung von Wasserstoff eine Leistung von mindestens 2,2 MW bis 10 MW aufweist.

### Süd-Europa, Afrika und Mittlerer Osten

Hier ist eine Nutzung in den Sektoren Industrie und Privat für den europäischen Markt zweckmäßig. Eine Dimensionierung der Anlage 1, welche über das Jahr betrachtet eine dauerhafte Belieferung mit grüner Energie ermöglicht (100 % Dimensionierung) stellt in diesen Regionen keine Herausforderung dar. Eine in diesem Sinne mögliche Dimensionierung der Komponenten wäre z.B. wie folgt: 8 GW Elektrolyse, 18 GW Photovoltaikanlage, 11 GW Windkraftanlage, 35 GWh Batterie. Die vorliegende Energiedichte (W/m²) für Wind- und Solareinstrahlung ist im Vergleich zu Europa bei gleicher Auslegung der Kapazität der Anlage derart möglich, dass mit niedrigeren Investitionen ausreichende Energie für einen Betrieb über 8760 Stunden ermöglicht ist. Dabei kann auch ein Energieüberschuss, z.B. 30 %, produziert werden. Dieser Energieüberschuss wird als Delta-Energie bezeichnet. Die Delta-Energie wird über das öffentliche Netz dem Land zugeführt, zuzüglich Wasser und Salz, das von der eingangs beschriebenen Entsalzungsanlage stammt. Das für die Herstellung des Wasserstoffs benötigte Wasser wird durch die Entsalzungsanlage produziert. Da mehr Wasser durch die Entsalzungsanlage produziert wird als durch die Vorrichtung 21 zur Herstellung von Wasserstoff kann der Wasserüberschuss als Trinkwasser dem Land zur Verfügung gestellt werden. Salz ist ein Nebenprodukt.

Der am Ort der Anlage 1 durch die Elektrolyse 21 erzeugte Wasserstoff wird vorzugsweise durch das LOHC-Verfahren in flüssiger Form in Speicherbehältnissen gespeichert. Dabei wird der Wasserstoff direkt nach seiner Produktion im LOHC-Verfahren mit einem organischen Stoff gebunden. Das Volumen der Speicherbehältnisse kann beispielsweise 45.000 m³ betragen. Via Schiff gelangt der Wasserstoff dann nach Europa oder in andere Märkte, um dort aus den transportablen Speicherbehältnissen den betreffenden Markt zu versorgen.

Die Anlage ermöglicht damit die kostengünstige Bereitstellung von Wasserstoff für die Sektoren Privat, Industrie als auch Mobilität in den Zielmärkten.

Eine zweckmäßige Ausgestaltung sieht vor, dass die Stromerzeugungsvorrichtung, die Vorrichtung 21 zur Erzeugung von Wasserstoff, die Entsalzungsanlage 60 und der Energiespeicher 30 derart dimensioniert sind, dass ein energie-autarker Betrieb der Anlage an 100 % der Jahrestage ermöglicht ist. Die Dimensionierung der Komponenten sowie der Grad der erwünschten Energieautarkie in Bezug auf eine Anzahl von Tagen im Jahr kann durch Modellrechnungen, Versuche und dergleichen bestimmt werden. Insbesondere können dabei auch ökonomische und ökologische Überlegungen einbezogen werden. Mit berücksichtigt wird die geforderte Partizipation des betreffenden Landes an erneuerbarer Energie, Wasserproduktion und Salzherstellung.

Für beide oben genannten regionalen Ausführungen gilt:
Es ist möglich, dass die Anlage 1 eine Mehrzahl an Gasentnahmestellen zur gleichzeitigen Entnahme von Wasserstoff durch mit Wasserstoff betriebene Kraftfahrzeuge vor Ort aufweist, so dass eine Vielzahl von Kraftfahrzeugen und/oder Lastkraftwagen gleichzeitig mit Wasserstoff betankt werden können. Die genaue Anzahl der Gasentnahmestellen kann flexibel an die Anzahl von mit Wasserstoff betriebenen Kraftfahrzeugen am Ort der Anlage angepasst werden.

Dies gilt auch für die Stromentnahmestellen. Es kann vorgesehen sein, dass eine Mehrzahl an Stromentnahmestellen zur gleichzeitigen Entnahme von Strom durch elektrisch oder hybrid-elektrisch betriebene Kraftfahrzeuge am Ort der Anlage vorgesehen ist. Die Stromentnahmestellen können insbesondere als Schnelllader ausgebildet sein. Diese ermöglichen das Laden des Batteriespeichers des zu ladenden Fahrzeugs in kurzer Zeit mit hoher Leistung. Die Stromentladestellen können abhängig von der von den Kraftfahrzeugen benötigten Ladetechnologie wahlweise auf Wechselstrom (AC) oder Gleichstrom (DC) basieren. Die Stromentladestellen können sowohl ein Laden mit Gleichstrom als auch Wechselstrom ermöglichen.

Die Verschaltung des wiederaufladbaren Energiespeichers als Energiekaskade und der Stromerzeugungsvorrichtung ist vorzugsweise derart, dass kein Stromfluss über das öffentliche Stromnetz 100 erfolgt. Mit anderen Worten bedeutet dies, dass der Stromfluss ausschließlich über das Verteilnetz der Anlage 1 (grüne Insel) fließt.

Eine zweckmäßige Ausgestaltung sieht vor, dass bei der Anlage, die Vorrichtung 21 zur Erzeugung von Wasserstoff eine Leistung von 100 MW bis 8 GW aufweist.

### B ezugszei chenli ste

- 1: Anlage
- 10: Stromerzeugungsvorrichtung
- 11: Windkraftanlage
- 12: Photovoltaikanlage
- 13: Wasserkraftwerk
- 20: Stromverbraucher
- 21: Vorrichtung zur Erzeugung von Wasserstoff
- 22: ortsfester Druckspeicher
- 22-1,22-2: Gasentnahmestelle
- 23: transportabler Druckspeicher (Wechselsystem)
- 26: Stromabnahmeeinheit
- 27: Ladestation
- 27-1,27-2: Ladepunkt
- 28: transportabler Energiespeicher (Wechselsystem)
- 30: Energiespeicher
- 31, 32, 33: Energiespeicherblock
- 31-1,..,31-n, 32-1,..,32-n, 33-1,..,33-n: Speichermodul
- 35: Schalteinrichtung
- 40: Steuerungseinheit (40)
- 50: Umspannwerk
- 51: Netzeinspeisepunkt
- 60: Entsalzungsanlage
- 100: öffentliches Versorgungsnetz

## Patentansprüche

1. Anlage zur autarken und ununterbrochenen Bereitstellung zumindest eines alternativen Energieträgers, umfassend Wasserstoff, wobei die Anlage (1) als Komponenten, die zusammen an einem Ort in räumlicher Nähe angeordnet sind, umfasst:
- eine Stromerzeugungsvorrichtung (10) zur Erzeugung von Strom aus regenerativen Energien, umfassend zumindest eine Windkraftanlage (11) und/oder zumindest eine Photovoltaikanlage (12) und/oder ein Wasserkraftwerk (12);
- zumindest einen Stromverbraucher (20), umfassend eine Vorrichtung (21) zur Erzeugung von Wasserstoff durch elektrochemische Spaltung von Wasser in Wasserstoff und Sauerstoff;
- einen wieder aufladbaren Energiespeicher (30), in den von der Stromerzeugungsvorrichtung (10) erzeugter Strom für eine Entnahme durch den zumindest einen Stromverbraucher (20) gespeichert wird;
- eine Steuerungseinheit (40) zur Steuerung der Energieerzeugung der Stromerzeugungsvorrichtung (10), des Ladezustands des Energiespeichers (30) und des Energieverbrauchs des Stromverbrauchers (20);
**dadurch gekennzeichnet, dass**
- der Energiespeicher (30) eine Schalteinrichtung (35) und zumindest einen Energiespeicherblock (31, 32, 33) mit jeweils zumindest zwei Speichermodulen (31-1,..,31-n; 32-1,.., 32-n; 33-1,..,33-n) umfasst;
- der Energiespeicher (30) zwischen der Stromerzeugungsvorrichtung (10) und dem zumindest einen Stromverbraucher (20) verschaltet ist;
- wobei die Schalteinrichtung (35) dazu ausgebildet ist, einen direkten Stromfluss zwischen der Stromerzeugungsvorrichtung (10) und dem zumindest einen Stromverbraucher (20) in einer ersten Betriebssituation zu ermöglichen und in einer zweiten Betriebssituation zu unterbrechen; und
- wobei die Steuerungseinheit (40) dazu ausgebildet ist, in der zweiten Betriebssituation durch Steuerung der Schalteinrichtung (35) ein erstes Speichermodul (31-1,..,31-n; 32-1,.., 32-n; 33-1,..,33-n) der zwei Speichermodule (31-1,..,31-n; 32-1,.., 32-n; 33-1,..,33-n) des zumindest einen Energiespeicherblocks (31, 32, 33) mit der Stromerzeugungsvorrichtung (10) zu verbinden, um das erste Speichermodul (31-1,..,31-n, 32-1,.., 32-n; 33-1,..,33-n) zu laden, und zeitgleich ein zweites Speichermodul (31-1,..,31-n, 32-1,.., 32-n; 33-1,..,33-n) der zwei Speichermodule (31-1,..,31-n, 32-1,.., 32-n; 33-1,..,33-n) mit dem zumindest einen Stromverbraucher (20) zu verbinden, um den zumindest einen Stromverbraucher (20) aus dem zweiten Speichermodul (31-1,..,31-n; 32-1,.., 32-n; 33-1,..,33-n) zu versorgen.

2. Anlage nach Anspruch 1, **dadurch gekennzeichnet, dass** die Steuerungseinheit (40) dazu ausgebildet ist, abhängig von einem jeweiligen Ladezustand des ersten und des zweiten Speichermoduls (31-1,..,31-n; 32-1,.., 32-n; 33-1,..,33-n), in der zweiten Betriebssituation durch Steuerung der Schalteinrichtung (35) eine Umschaltung durchzuführen, um das zweite Speichermodul (31-1,..,31-n; 32-1,.., 32-n; 33-1,..,33-n) der zwei Speichermodule (31-1,..,31-n, 32-1,.., 32-n; 33-1,..,33-n) des zumindest einen Energiespeicherblocks (31, 32, 33) mit der Stromerzeugungsvorrichtung (10) zu verbinden, um das zweite Speichermodul (31-1,..,31-n; 32-1,.., 32-n; 33-1,..,33-n) zu laden, und zeitgleich das erste Speichermodul (31-1,..,31-n; 32-1,.., 32-n; 33-1,..,33-n) der zwei Speichermodule (31-1,..,31-n, 32-1,.., 32-n; 33-1,..,33-n) mit dem zumindest einen Stromverbraucher (20) zu verbinden, um den zumindest einen Stromverbraucher (20) aus dem ersten Speichermodul (31-1,..,31-n; 32-1,.., 32-n; 33-1,..,33-n) zu versorgen.

3. Anlage nach Anspruch 1 oder 2, **dadurch gekennzeichnet, dass** die Steuerungseinheit (40) dazu ausgebildet ist, die Anlage (1) durchgängig in der zweiten Betriebssituation zu betreiben.

4. Anlage nach einem der vorhergehenden Ansprüche, **dadurch gekennzeichnet, dass** die Steuerungseinheit (40) dazu ausgebildet ist, die Anlage (1) in der ersten Betriebssituation zu betreiben, wenn der Ladezustand des ersten und des zweiten Speichermoduls (31-1,..,31-n, 32-1,.., 32-n; 33-1,..,33-n) 100% beträgt.

5. Anlage nach einem der vorhergehenden Ansprüche, **dadurch gekennzeichnet, dass** die Steuerungseinheit (40) dazu ausgebildet ist, in einer dritten Betriebssituation durch Steuerung der Schalteinrichtung (35) einen direkten Stromfluss zwischen der Stromerzeugungsvorrichtung (10) und dem zumindest einen Stromverbraucher (20) zu ermöglichen und das erste Speichermodul (31-1,..,31-n; 32-1,.., 32-n; 33-1,..,33-n) der zwei Speichermodule (31-1,..,31-n, 32-1,.., 32-n; 33-1,..,33-n) des zumindest einen Energiespeicherblocks (31, 32, 33) mit der Stromerzeugungsvorrichtung (10) zu verbinden, um das erste Speichermodul (31-1,..,31-n; 32-1,.., 32-n; 33-1,..,33-n) zu laden, und zeitgleich das zweite Speichermodul (31-1,..,31-n; 32-1,.., 32-n; 33-1,..,33-n) der zwei Speichermodule (31-1,..,31-n; 32-1,.., 32-n; 33-1,..,33-n) mit dem zumindest einen Stromverbraucher (20) zu verbinden, um den zumindest einen Stromverbraucher (20) aus dem zweiten Speichermodul (31-1,..,31-n, 32-1,.., 32-n; 33-1,..,33-n) zu versorgen, oder umgekehrt.

6. Anlage nach einem der vorhergehenden Ansprüche, **dadurch gekennzeichnet, dass** der zumindest eine Energiespeicherblock (31, 32, 33) eine ungerade Anzahl von Speichermodulen (31-1,..,31-n; 32-1,.., 32-n; 33-1,..,33-n) umfasst.

7. Anlage nach einem der vorhergehenden Ansprüche, **dadurch gekennzeichnet, dass** die Steuerungseinheit (40) dazu ausgebildet ist, zu jedem Zeitpunkt eines oder mehrerer Zeitpunkte während des Betriebs der Anlage (1) den Ladezustand eines Speichermoduls (31-1,..,31-n, 32-1,.., 32-n; 33-1,..,33-n) des zumindest einen Energiespeicherblocks (31, 32, 33) zu 100% zu halten.

8. Anlage nach einem der vorhergehenden Ansprüche, **dadurch gekennzeichnet, dass** die Kapazität des Energiespeichers (30) dimensioniert ist, den zumindest einen Stromverbraucher (20) unterbrechungsfrei für einen Zeitraum zwischen 10h und 15h zu versorgen.

9. Anlage nach einem der vorhergehenden Ansprüche, **dadurch gekennzeichnet, dass** die Vorrichtung (21) zur Erzeugung von Wasserstoff auf dem Prinzip der alkalischen Elektrolyse basiert.

10. Anlage nach einem der vorhergehenden Ansprüche, **dadurch gekennzeichnet, dass** diese eine Entsalzungsanlage (60) zur Entsalzung von Meerwasser umfasst, die im Betrieb der Anlage (1) der Vorrichtung (21) zur Erzeugung von Wasserstoff entsalztes Wasser für die Elektrolyse bereitstellt.

11. Anlage nach Anspruch 10, **dadurch gekennzeichnet, dass** der Entsalzungsanlage (60) als Prozessenergie Wärme zugeführt wird, wobei als die Wärme während des Betriebs der Vorrichtung (21) zur Erzeugung von Wasserstoff erzeugte Abwärme verwendet wird.

12. Anlage nach einem der vorhergehenden Ansprüche, **dadurch gekennzeichnet, dass** der zumindest eine Stromverbraucher (20) einen oder mehrere der folgenden Verbraucher umfasst:
- eine Gasentnahmestelle (22; 22-1, 22-2) zur Entnahme von Wasserstoff durch ein mit Wasserstoff betriebenes Kraftfahrzeug;
- einen transportablen Druckspeicher (23), insbesondere in Gestalt eines ISO-Containers.

13. Anlage nach einem der vorhergehenden Ansprüche, **dadurch gekennzeichnet, dass** der zumindest eine Stromverbraucher (20) einen oder mehrere der folgenden elektrischen Verbraucher (26) umfasst:
- eine Stromentnahmestelle (27; 27-1, 27-2) zur Entnahme von elektrischer Energie für eine Batterie eines elektrisch oder hybrid-elektrisch betriebenen Kraftfahrzeugs;
- einen wiederaufladbaren, transportablen Energiespeicher (28) als Wechselenergiespeicher, insbesondere in Gestalt eines ISO-Containers.

14. Anlage nach einem der vorhergehenden Ansprüche, **dadurch gekennzeichnet, dass** die Anlage (1) ein Umspannwerk (50) umfasst über das die Anlage (1) mit einem öffentlichen Versorgungsnetz (100) gekoppelt ist oder bei Bedarf koppelbar ist.

15. Verfahren zur autarken und ununterbrochenen Bereitstellung zumindest eines alternativen Energieträgers, umfassend Wasserstoff, wobei die Anlage (1) als Komponenten, die zusammen an einem Ort in räumlicher Nähe angeordnet sind, umfasst:
- eine Stromerzeugungsvorrichtung (10) zur Erzeugung von Strom aus regenerativen Energien, umfassend zumindest eine Windkraftanlage und/oder zumindest eine Photovoltaikanlage und/oder ein Wasserkraftwerk;
- zumindest einen Stromverbraucher (20), umfassend eine Vorrichtung (21) zur Erzeugung von Wasserstoff durch elektrochemische Spaltung von Wasser in Wasserstoff und Sauerstoff;
- einen wieder aufladbaren Energiespeicher (30), in den von der Stromerzeugungsvorrichtung (10) erzeugter Strom für eine Entnahme durch den zumindest einen Stromverbraucher (20) gespeichert wird, wobei der Energiespeicher (30) eine Schalteinrichtung (35) und zumindest einen Energiespeicherblock (31, 32, 33) mit jeweils zumindest zwei Speichermodulen (31-1,..,31-n, 32-1,.., 32-n; 33-1,..,33-n) umfasst, wobei der Energiespeicher (30) zwischen der Stromerzeugungsvorrichtung (10) und dem zumindest einen Stromverbraucher (20) verschaltet ist und wobei die Schalteinrichtung (35) dazu ausgebildet ist, einen direkten Stromfluss zwischen der Stromerzeugungsvorrichtung (10) und dem zumindest einen Stromverbraucher (20) in einer ersten Betriebssituation zu ermöglichen und in einer zweiten Betriebssituation zu unterbrechen;
- eine Steuerungseinheit (40) zur Steuerung der Energieerzeugung der Stromerzeugungsvorrichtung (10), des Ladezustands des Energiespeichers (30) und des Energieverbrauchs des Stromverbrauchers (20);
wobei die folgenden Schritte durch die Steuerungseinheit (40) durchgeführt werden:
- in der zweiten Betriebssituation die Schalteinrichtung (35) so gesteuert wird, dass ein erstes Speichermodul (31-1,..,31-n, 32-1,.., 32-n; 33-1,..,33-n) der zwei Speichermodule (31-1,..,31-n, 32-1,.., 32-n; 33-1,..,33-n) des zumindest einen Energiespeicherblocks (31, 32, 33) mit der Stromerzeugungsvorrichtung (10) verbunden ist, um das erste Speichermodul (31-1,..,31-n, 32-1,.., 32-n; 33-1,..,33-n) zu laden, und zeitgleich ein zweites Speichermodul (31-1,..,31-n; 32-1,.., 32-n; 33-1,..,33-n) der zwei Speichermodule (31-1,..,31-n, 32-1,.., 32-n; 33-1,..,33-n) mit dem zumindest einen Stromverbraucher (20) verbunden wird, um den zumindest einen Stromverbraucher (20) aus dem zweiten Speichermodul (31-1,..,31-n; 32-1,.., 32-n; 33-1,..,33-n) zu versorgen.

16. Verfahren nach Anspruch 15, **dadurch gekennzeichnet, dass** die Steuerungseinheit (40), abhängig von einem jeweiligen Ladezustand des ersten und des zweiten Speichermoduls (31-1,..,31-n; 32-1,.., 32-n; 33-1,..,33-n), in der zweiten Betriebssituation die Schalteinrichtung (35) umschaltet, um das zweite Speichermodul (31-1,..,31-n; 32-1,.., 32-n; 33-1,..,33-n) der zwei Speichermodule (31-1,..,31-n; 32-1,.., 32-n; 33-1,..,33-n) des zumindest einen Energiespeicherblocks (31, 32, 33) mit der Stromerzeugungsvorrichtung (10) zu verbinden, um das zweite Speichermodul (31-1,..,31-n; 32-1,.., 32-n; 33-1,..,33-n) zu laden, und zeitgleich das erste Speichermodul (31-1,..,31-n, 32-1,.., 32-n; 33-1,..,33-n) der zwei Speichermodule (31-1,..,31-n, 32-1,.., 32-n; 33-1,..,33-n) mit dem zumindest einen Stromverbraucher (20) zu verbinden, um den zumindest einen Stromverbraucher (20) aus dem ersten Speichermodul (31-1,..,31-n; 32-1,.., 32-n; 33-1,..,33-n) zu versorgen.

17. Verfahren nach Anspruch 15 oder 16, **dadurch gekennzeichnet, dass** die Steuerungseinheit (40) die Anlage (1) durchgängig in der zweiten Betriebssituation betreibt.

18. Verfahren nach einem der Ansprüche 15 bis 17, **dadurch gekennzeichnet, dass** die Steuerungseinheit (40) die Anlage (1) in der ersten Betriebssituation betreibt, wenn der Ladezustand des ersten und des Speichermoduls (31-1,..,31-n; 32-1,.., 32-n; 33-1,..,33-n) 100% beträgt.

19. Verfahren nach einem der Ansprüche 15 bis 18, **dadurch gekennzeichnet, dass** die Steuerungseinheit (40) in einer dritten Betriebssituation die Schalteinrichtung (35) so steuert, um einen direkten Stromfluss zwischen der Stromerzeugungsvorrichtung (10) und dem zumindest einen Stromverbraucher (20) zu ermöglichen und das erste Speichermodul (31-1,..,31-n; 32-1,.., 32-n; 33-1,..,33-n) der zwei Speichermodule (31-1,..,31-n, 32-1,.., 32-n; 33-1,..,33-n) des zumindest einen Energiespeicherblocks (31, 32, 33) mit der Stromerzeugungsvorrichtung (10) zu verbinden, um das erste Speichermodul (31-1,..,31-n; 32-1,.., 32-n; 33-1,..,33-n) zu laden, und zeitgleich das zweite Speichermodul (31-1,..,31-n; 32-1,.., 32-n; 33-1,..,33-n) der zwei Speichermodule (31-1,..,31-n, 32-1,.., 32-n; 33-1,..,33-n) mit dem zumindest einen Stromverbraucher (20) zu verbinden, um den zumindest einen Stromverbraucher (20) aus dem zweiten Speichermodul (31-1,..,31-n, 32-1,.., 32-n; 33-1,..,33-n) zu versorgen, oder umgekehrt.
